# EUROPÄISCHE PATENTANMELDUNG

(11) **EP 3 373 545 A1**
(43) Veröffentlichungstag der Anmeldung: **12.09.2018**
(21) Anmeldenummer: 17159631.5
(22) Anmeldetag: 07.03.2017
(51) Int. Cl.: H04L 29/06, H04W 12/04, H04W 4/00, H04L 29/08

(54) **SICHERHEITSEINHEIT INSBESONDERE EIN FÜR IOT-GERÄT UND VERFAHREN ZUR AUSFÜHRUNG EINER ODER MEHRERER APPLIKATIONEN ZUM GESICHERTEN DATENAUSTAUSCH MIT EINEM ODER MEHRERE WEB-DIENSTE BEREITSTELLENDEN SERVERN**

(71) Anmelder: Siemens Aktiengesellschaft, 80333 München (DE)
(72) Erfinder: Falk, Rainer, 85586 Poing (DE)

(57) **Zusammenfassung**

Die vorliegende Erfindung beansprucht eine Sicherheitseinheit (SE) geeignet für ein Gerät (IOT), insbesondere einem IOT-Gerät, zur Ausführung einer oder mehrerer Applikationen (A1, A2, A3) zum gesicherten Datenaustausch mit einem oder mehrere Web-dienste bereitstellenden Servern, wobei die Sicherheitseinheit ausgebildet ist mit:
- Mitteln (R, SE) zum Abbilden von Originaldaten auf korrespondierende Ersatzdaten und/oder umgekehrt, wobei die Original- und/oder Ersatzdaten jeweils ein Original- (01, 02, 03, 04) und/oder Ersatzschlüssel (T1, T2, T3, T4) bilden und/oder zu deren Bildung verwendbar sind,
- Mittel zum Erkennen eines von einer in Ausführung gebrachten Applikation (A1) gelieferten, mit einem Originalschlüssel korrespondierenden Ersatzschlüssels und
- Mittel (SE, R) zum Bereitstellen eines zum Ersatzschlüssel korrespondierenden, angeforderten Originalschlüssels mit Hilfe der genannten Mittel zum Abbilden, um den Originalschlüssel für den gesicherten Datenaustausch zum Server verwenden zu können.

## Beschreibung

Die vorliegende Erfindung betrifft ein Sicherheitseinheit insbesondere für ein IoT-Gerät und Verfahren zur Ausführung einer oder mehrerer Applikationen zum gesicherten Datenaustausch mit einem oder mehrere Web-dienste bereitstellenden Servern sowie ein zugehöriges Computerprogramm(-produkt).

### Hintergrund der Erfindung

Ein Trust Anchor (Vertrauensanker) wird für Computersysteme, unter anderem auch für eingebettete Systeme und IoT- Devices verwendet, um Security-Funktionen vertrauenswürdig und angriffsresistent zu realisieren. Ein herkömmlicher Trust Anchor (z.B. Crypto Controller, Secure Element) dient im Wesentlichen nur der Speicherung von kryptographischen Schlüsseln und der Ausführung von elementaren kryptographischen Operationen (z.B. Verschlüsselung, Entschlüsselung unter Verwendung des lokal gespeicherten Schlüssels). Der Trust Anchor wird von einem Applikationsprozessor angesprochen, der eine Software bzw. Applikation ausführt. Der Applikationsprozessor kann jedoch auch manipulierte Software ausführen (z.B. wenn Schwachstellen von einem Angreifer ausgenutzt werden) und dann damit die von einem Trust Anchor bereitgestellten kryptographischen Dienste nutzen. Daher besteht ein Bedarf, sensible Applikationslogik zur Nutzung von kryptographischen Basisoperationen zu schützen. Es besteht zudem ein Bedarf für einen besseren Schutz der Behandlung von JSON Web Tokens (JWT), die bei Internet-basierten Web-Diensten und IoT-Diensten intensiv genutzt werden.

Als ein eingebettetes System (auch englisch "embedded system" genannt) bezeichnet man einen elektronischen Rechner oder auch Computer, der in einen technischen Kontext eingebunden (eingebettet) ist. Dabei übernimmt der Rechner in der Regel entweder Überwachungs-, Steuerungs- oder Regelfunktionen oder ist für eine Form der Daten- bzw. Signalverarbeitung zuständig, beispielsweise beim Ver- bzw. Entschlüsseln, Codieren bzw. Decodieren oder Filtern. In die Kategorie "embedded system" kann auch ein Feldgerät, kurz FG, engl. Field Device (FD), einsortiert werden.

Der Begriff Internet der Dinge (IdD) (auch: "Allesnetz"; englisch Internet of Things, Kurzform: IoT) beschreibt, dass der (Personal-) Computer in der digitalen Welt zunehmend von "intelligenten Gegenständen" bis hin zu "KI", künstlicher Intelligenz ergänzt wird. Das "Internet der Dinge", oft realisiert mit immer kleineren eingebetteten Systemen, soll den Anwender bei seinen Tätigkeiten unmerklich unterstützen, ohne abzulenken oder überhaupt aufzufallen.

Der Einsatz von Crypto Controllern oder Hardware Secure Elements (Chipkartenprozessor, Trusted Platform Module, Security Module) ist möglich. Dabei handelt es sich um speziell geschützte Mikroprozessoren. Es gibt weiterhin allgemeine Mikrocontroller / Applikationsprozessoren mit integriertem Schlüsselspeicher (Fuses) und Hardware Crypto Engine (performance, Stromverbrauch).

Aus der Patentschrift US6735627 ist ein System und eine Methode für sogenannte Smart Cards bekannt, die die Übertragung von Multimedia Daten über ein IP-basiertes Netzwerk ermöglichen. Dabei wird das TLS-Kommunikationsprotokoll auf einem Secure Element (Smart Card Chip) realisiert. Bei Kreditkarten sind spezielle Dienste bzw. Anwendungen zum Ersetzen der Kreditkartennummer durch ein Pseudonym bekannt, sodass im kaufmännischen Abrechnungssystem nicht die tatsächlichen Kreditkartennummern vorliegen.

Dies wird als Tokenization bezeichnet. Siehe z.B.
https://en.wikipedia.org/wiki/Tokenization (data security) und
https://www.pcisecuritystandards.org/documents/Tokenization G uidelines Info Supplement.pdf.

Viele Web-Dienste werden auf Basis von OAUTH (Authentisierungsprotokoll, siehe https://en.wikipedia.org/wiki/OAuth , https://tools.ietf.org/html/rfc6749) geschützt (d.h. unter Verwendung von JSON Web Token). Die Token werden heute auf Client-Plattform durch die Applikation gespeichert.
Einen Überblick über JSON Web Tokens (JWT) gibt z.B. https://en.wikipedia.org/wiki/JSON Web Token.
JWT sind im Internet-Standard RFC 7519 standardisiert (https://tools.ietf.org/html/rfc7519).

Es ist bekannt, dass ein Client sein JWT selbst generiert, siehe z.B. http://blog.keycloak.org/2015/10/authentication-of-clients-with-signed.html.

Die Sicherheit innerhalb solch einer Infrastruktur sowie das Verhindern von absichtlichen Angriffen spielt eine zunehmend wichtigere Rolle. Bei einer erfolgreichen Manipulation kann es zu einer Fehlfunktion in Steuerungsfunktionen der oben genannten Geräte kommen.

Durch kryptographische Schutzfunktionen können Ziele wie Integrität, Vertraulichkeit oder Authentizität der Gegenstände erreicht werden. Dadurch werden absichtliche, zielgerichtete Angriffe abgewehrt.

Der Begriff "Sicherheit" bezieht sich im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört unter anderem zum Begriff "Sicherheit. Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Schutzfunktionalität kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. Tamper-Schutz, Systemintegrität, Security Incident and Event Management SIEM)
- Überwachen oder Überwachung von Daten
- Validierung von Daten
- Filterung von Daten

Die aufgezählten kryptografischen Funktionalitäten können dabei jeweils wieder mit anderen/weiteren Verfahren oder Kombinationen dieser Verfahren ausgeführt sein.

Weiterhin ist es möglich, dass ein Nutzer als Teil einer HTTP-Anfrage ein Autorisierungstoken als Datenstruktur (s.o. JWT, JSON Web Token) vom Nutzer (Web-Browser) an den Web-Server überträgt. Das JWT-Autorisierungstoken wird normalerweise von einem "Single Sign On"-Dienst ausgestellt. Weiterhin ist es möglich, dass das HTTP-Protokoll (HTTP, CoAP) über eine kryptographisch geschützte Kommunikationsverbindung (TLS, DTLS) übertragen wird. Dabei wird meist nur der Server mittels eines digitalen Zertifikats authentisiert. Es ist jedoch auch möglich, dass auch der Client sich mit seinem Client-Zertifikat authentisiert.

Es ist Aufgabe der Erfindung, die Sicherheits- bzw. Schutzmaßnahmen für Geräte, die zur Ausführung einer oder mehrere Applikationen zum Datenaustausch mit einem oder mehrere Web-dienste bereitstellenden Servern ausgebildet sind, zu verbessern.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht eine Sicherheitseinheit geeignet für ein Gerät, insbesondere einem IOT-Gerät, zur Ausführung einer oder mehrerer Applikationen zum gesicherten Datenaustausch mit einem oder mehrere Web-dienste bereitstellenden Servern, wobei die Sicherheitseinheit ausgebildet ist mit:
- Mitteln zum Abbilden von Originaldaten auf korrespondierende Ersatzdaten und/oder umgekehrt, wobei die Original- und/oder Ersatzdaten jeweils ein Original- und/oder Ersatzschlüssel bilden und/oder zu deren Bildung verwendbar sind,
- Mittel zum Erkennen eines von einer in Ausführung gebrachten Applikation gelieferten, mit einem Originalschlüssel korrespondierenden Ersatzschlüssels und
- Mittel zum Bereitstellen eines zum Ersatzschlüssel korrespondierenden, angeforderten Originalschlüssels mit Hilfe der genannten Mittel zum Abbilden, um den Originalschlüssel für den gesicherten Datenaustausch zum Server verwenden zu können.

Das Abbilden von Originaldaten auf Ersatzdaten bzw. von Ersatzdaten auf Originaldaten (Rückabbildung) kann durch eine Zuordnungstabelle umgesetzt bzw. durchgeführt werden.

Um den Datenaustausch möglich zu machen, kann der Originalschlüssel nur bei einem Verbindungsaufbau, sondern evtl. allgemein beim Übertragen einer Anfragenachricht zu einem Server verwendet werden. Die Anfragenachricht kann z.B. eine Verbindungsaufbau-Anfragenachricht, eine Anfragenachricht zum Datenaustausch (z.B. MQTT, XMPP) oder eine Web-Dienst-Anfragenachricht sein (HTTP, CoAP).

Eine Weiterbildung der Erfindung sieht zum transparenten Weiterleiten des Originalschlüssels auf der zum gesicherten Datenaustausch verwendbaren Kommunikationsprotokollebene vor.

Eine Weiterbildung der Erfindung sieht vor, dass in der Kommunikationsprotokollebene die Transportschichtsicherheit-Verschlüsselung, abgekürzt TLS oder DTLS, verwendet wird.

Eine Weiterbildung der Erfindung sieht vor, dass ein als Ersatzschlüssel gesetzter Platzhalter im Kommunikationsprotokoll zum gesicherten Datenaustausch durch den bereitgestellten Originalschlüssel ersetzbar ist.

Eine Nutzung eines Trust Anchors / Secure Elements bzw. der Sicherheitseinheit durch Anwendungsprogrammierer wird dadurch vereinfacht, dass im Internet übliche Technologien (JSON Web Token) verwendet werden. Eine fehleranfällige und ggf. manipulierbare direkte Nutzung kryptographischer Operationen ist nicht erforderlich. JSON Web Token als Sicherheits-kritische Daten müssen dabei nicht im normalen Applikationscode verwendet werden. Dadurch wird das Ausnutzen von Schwachstellen im Applikationscode erschwert.

Ein weiterer Aspekt der Erfindung ist ein IoT-Gerät umfassend eine Sicherheitseinheit der oben genannten Art, wobei das IoT-Gerät
- ein oder mehrere Applikationen ausgebildet zum Datenaustausch mit einem oder mehrere Web-Dienste bereitstellenden Servern und
- zumindest eine Ausführungseinheit aufweist, welche zum Ausführen der einen oder mehreren Applikationen ausgebildet ist.

Eine Weiterbildung des Geräts sieht vor, dass die eine oder mehrere Applikationen zu ihrer Ausführung einen solchen Ersatzschlüssel verwenden kann.

Eine Weiterbildung des Geräts sieht vor, dass der Ersatzschlüssel durch den angeforderten und von der Sicherheitseinheit bereitgestellten Originalschlüssel mittels der Ausführungseinheit ersetzt wird.

Eine Weiterbildung des Geräts sieht vor, dass der Ersatzschlüssel durch den angeforderten und von der Sicherheitseinheit bereitgestellten Originalschlüssel mittels der Sicherheitseinheit ersetzt wird.

Ein weiterer Aspekt der Erfindung ist ein Verfahren zur Ausführung einer oder mehrere Applikationen zum gesicherten Datenaustausch zwischen einem Gerät, insbesondere einem IoT-Gerät, und einem oder mehreren Web-Dienste bereitstellenden Servern, wobei folgende Schritte ausgeführt werden:
- Übertragen einer Nachricht zum Datenaustausch durch eine in Ausführung gebrachte Applikation, wobei die Nachricht durch Abbildung von Originaldaten auf korrespondierende Ersatzdaten, welche jeweils einen Original- und/oder Ersatzschlüssel bilden und/oder zu deren Bildung verwendet werden, modifiziert wird,
- Erkennen des von der in Ausführung gebrachten Applikation gelieferten, mit dem Originalschlüssel korrespondierenden Ersatzschlüssels und
- Bereitstellen eines zum Ersatzschlüssel korrespondierenden, angeforderten Originalschlüssels mit Hilfe einer Rückabbildung der genannten Abbildung, um den Originalschlüssel für den durch die genannte Nachricht eingeleiteten, gesicherten Datenaustausch zum Server zu verwenden.

In die genannte Nachricht kann ein Authentifizierungs-Kode und/oder eine -prüfsumme eingefügt sein.

Die vorstehend genannten Funktionen/Schritte können in Software, Firmware und/oder Hardware implementiert sein. Sie können als eine Art Funktionseinheiten verstanden werden, die auch in Ihrer Funktion in beliebiger Kombination in eine einzige Einheit (Komponente bzw. Server bzw. Gerät) integriert sein können.

Ein weiterer Aspekt der Erfindung kann ein Computerprogramm bzw. ein Computerprogrammprodukt mit mindestens einem Computerprogramm mit Mitteln zur Durchführung des Verfahrens und dessen genannte Ausgestaltungen sein, wenn das Computerprogramm(-produkt) bzw. das mindestens eine Computerprogramm im IoT-Gerät nach oben beschriebener Art zur Ausführung gebracht wird.

Obige Geräte und Verfahren und gegebenenfalls das Computerprogramm(produkt) können im Wesentlichen analog wie die Sicherheitseinheit und deren Ausgestaltungen bzw. Weiterbildungen entsprechend aus- bzw. weitergebildet werden.

Ausführungsbeispiel(e):
Weitere Vorteile, Einzelheiten und Weiterbildungen der Erfindung ergeben sich aus der nachfolgenden Beschreibung von Ausführungsbeispielen in Verbindung mit den Zeichnungen.

Dabei zeigen:
- die Figur 1: eine mögliche Ausführungsform des eingebetteten Systems,
- die Figur 2: ein Ablaufdiagramm bei der die Rückabbildung des Ersatzschlüssels auf den Originalschlüssels durch die Ausführungseinheit durchgeführt wird und
- die Figur 3: ein Ablaufdiagramm bei der die Rückabbildung des Ersatzschlüssels auf den Originalschlüssels durch die Sicherheitseinheit durchgeführt wird,

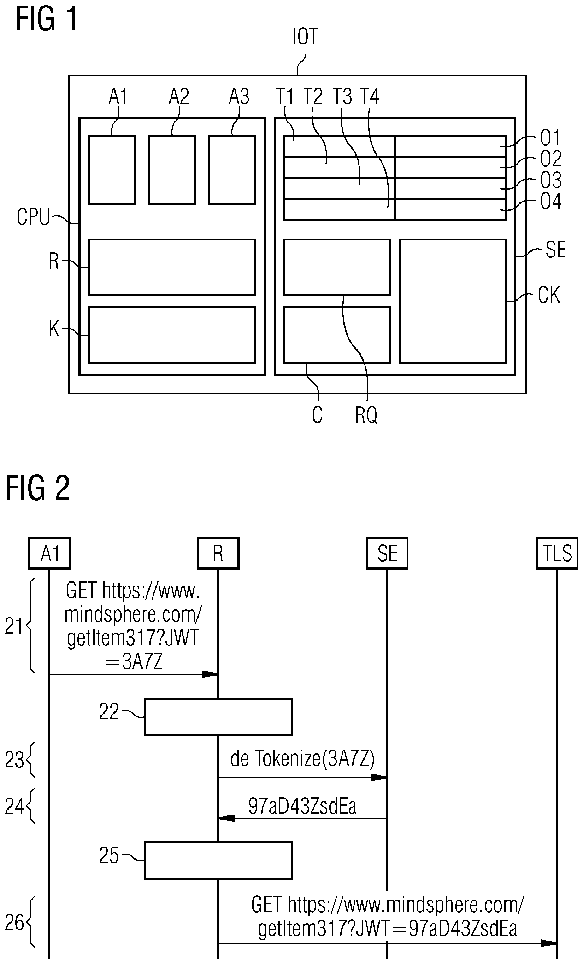

Figur 1 zeigt ein Beispiel für ein eingebettetes System in Form eines IoT-Geräts mit einer Recheneinheit CPU (Applikationsprozessor) mit einem Linux-basierten Betriebssystem, einer Ausführungseinheit in Form einer Applikations- bzw. App-Laufzeitumgebung R und mehreren Apps A1, A2, A3 (Applikationen). Die Recheneinheit CPU führt über die Ausführungseinheit R durch den Linux-Kernel K nacheinander oder parallel die Apps A1, A2, A3 aus. Die Apps kommunizieren (nicht dargestellt) über ein Protokoll, insbesondere HTTP, CoAP, REST, MQTT, XMPP, mit einem Web-Dienste zur Verfügung stellenden Server.

Das IoT-Gerät IOT verfügt über eine Sicherheitseinheit SE für JSON Web Token oder andere Schlüssel, die aus entsprechenden Daten ableitbar sind. Die Sicherheitseinheit SE umfasst hier eine Abbildungs- bzw. Zuordnungstabelle zwischen sogenannten tokenized JWT T1, T2, T3, T4 (Ersatz-JWT bzw. -Schlüssel, die innerhalb des IoT-Gerätes durch die Apps verwendet werden) und den originalen JWT O1, O2, O3, O4 (Originalschlüssel), die gegenüber den externen Web-Services verwendet werden. Die App-Laufzeitumgebung ersetzt hier z.B. einen HTTP/REST-Requestnachricht, die von einer App an die App Runtime übertragen wird, das darin enthaltene "Tokenized JWT" durch das reale JWT. In einer Ausführung wird die HTTP/REST-Requestnachricht RQ dazu an die Sicherheitseinheit SE übertragen und dort, nach Ersetzen des JWT, mittels eines TLS-Protokolls geschützt (verschlüsselt), und die verschlüsselte Nachricht wird zurück an die Ausführungseinheit R übertragen, um diese dann z.B. über eine TCP-Verbindung oder als UDP-Paket über eine Netzwerkschnittstelle zu einem nicht dargestellten Server zu übertragen. Weiterhin verfügt hier die Sicherheitseinheit SE über einen JWT Client Key CK. Damit kann die Sicherheitseinheit SE mit Hilfe eine Generierungseinheit C beispielsweise ein Client-signiertes JWT Token in einer geschützten Ausführungseinheit - bzw. App-Laufzeitumgebung generieren. Weiterhin kann die Sicherheitseinheit eine geschützte JWT-Requestnachricht RQ generieren, mit der von einem Web-Dienst, bereitgestellt von dem Server, insbesondere von einem sogenannten IAM-Web-Dienst unter Nutzung eines Refresh-JWT-Tokens ein Session-JWT-Token (Access Token) geschützt angefordert werden kann.

Die Sicherheitseinheit kann in Hardware, als Firmware, oder als durch einen Hypervisor separierten Software-Prozess realisiert sein. Die Sicherheitseinheit kann insbesondere auf einem Client-System, insbesondere auf einem IoT-Gerät oder auf einem anderen eingebetteten Gerät bzw. Mobilgerät realisiert sein. Sie kann jedoch grundsätzlich auch auf einem Server, insbesondere einem Cloud-basiertem Web-Dienst-System realisiert sein.

Die Sicherheitseinheit kann über folgende (Teil-) Funktionalitäten bzw. Mittel vollständig oder teilweise aufweisen bzw. bereitstellen:
- Lokales Ausstellen eines Client JWT (client signed JWT unter Verwendung eines lokal gespeicherten kryptographischen Schlüssels)
- Ausstellen einer geschützten Anforderungsnachricht zum Anfordern eines neuen Access-Tokens mittels eines auf der Sicherheitseinheit SE hinterlegten Refresh Tokens
- Bereitstellen eines Ersatz-JWT (eingangs erwähnte Tokenization des JSON Web Tokens). In einer Applikation kann das Ersatz-JWT anstatt des originalen (tatsächlichen) JWT-Tokens verwendet werden. Mit anderen Worten ausgedrückt, es gibt eine bijektive Abbildung bzw. Zuordnungstabelle von Originaldaten auf korrespondierende Ersatzdaten, welche jeweils einen Original-JWT (O1, O2, O3, O4) und/oder Ersatz-JWT (T1, T2, T3, T4) bilden und/oder zu deren Bildung verwendet werden.

Dadurch kann eine manipulierte Anwendungssoftware, z.B. ein Web Service Client, den originalen JWT beispielsweise nicht direkt weitergeben. Das von der Applikation verwendete Ersatz-JWT wird durch die Sicherheitseinheit transparent ersetzt (z.B. überträgt die Applikation eine HTTP/REST-Nachricht an die Sicherheitseinheit SE, welche das Ersatz-JWT durch das zugeordnete tatsächliche JWT-Token ersetzt (Rückabbildung) und über eine TLS-geschützte Kommunikationsverbindung überträgt;
- Einfügen eines JWT in einen TLS/DTLS-Datenstrom (in Verschlüsselungspfad Modifikation des
   Klartexts, um JWT zu ergänzen; Die Applikation z.B. A1 setzt dabei einen Identifier bzw. Platzhalter, das durch das echte Token ersetzt wird). Hier erfolgt also keine echte okenization, sondern es wird in ein Formatfeld (z.B: "##JSONWEBTOKEN##") das JWT eingetragen.
- Ausstellen einer Eigentümer-Prüfsumme zur Nutzung eines JWT mit bestimmten Nutzdaten (z.B. Message Authentication Code)

Die Figur 2 zeigt einen möglichen Ablauf, der mit einzelnen Schritten 21 bis 26 gekennzeichnet ist, auf dem IoT-Gerät, bei dem eine Applikation (App) z.B. hier A1 eine RequestNachricht senden möchte. Dazu überträgt in Schritt 21 die Applikation A1 die Nachricht an eine nicht dargestellte Anwendungsprogrammierschnittstelle, abgekürzt API, der Ausführungseinheit R. Die Nachricht enthält einen Ersatzschlüssel in Form eines tokenisierten JWT. Basierend auf der Nachricht wird eine Anfrage an die Sicherheitseinheit SE gestellt, um das tokenisierte JWT durch das originale bzw. reale, extern gültige JWT zu ersetzen. Die Ausführungseinheit R prüft in Schritt 22, ob ein tokenisiertes Ersatz-JWT vorliegt und bildet in den Schritten 23 und 24, 25 (Rückabbildung) eine modifizierte Anfrage-Nachricht, die anstatt des tokenisierten Ersatz-JWT das originale JWT enthält. Diese wird in Schritt 26 an einen TLS-Kommunikationsstapel (Stack) TLS übergeben, um sie an den angegebenen Server zu übertragen.

Dies hat den Vorteil, dass die Applikation (App), hier z.B. A1 das eigentliche JWT, das extern gültig ist, nicht kennt. Daher kann selbst eine manipulierte Applikation das JWT nicht preisgeben.

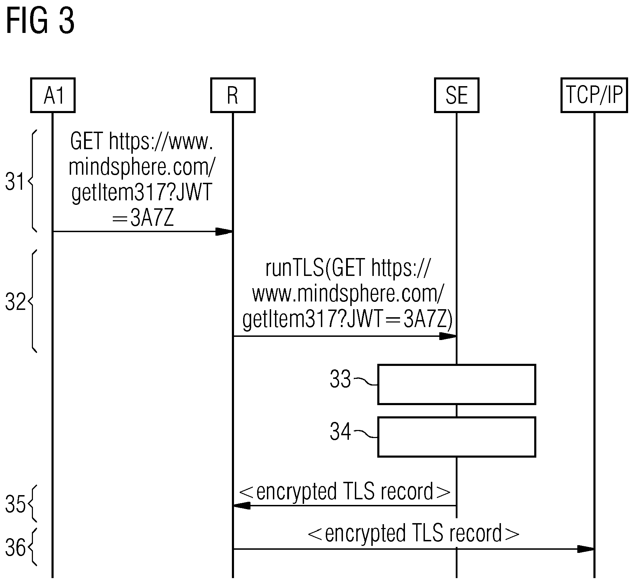

Figur 3 zeigt eine Ausführungsform eines Ablaufs, der mit einzelnen Schritten 31 bis 36 gekennzeichnet ist, bei der auf der Sicherheitseinheit die JWT-Tokenbehandlung erfolgt und das TLS-Protokoll realisiert ist. TLS ist eine Transportschichtsicherheit-Verschlüsselung, die mit TLS für eine darunterliegende TCP-basierten Übertragung oder mit DTLS für eine darunterliegende UDP-basierten Übertragung), abgekürzt wird.

Hierbei wird läuft Schritt 31 wie Schritt 21 ab. In Schritt 32 wird die die oben genannte Nachricht transparent (= getunneltes Weiterleiten bzw. nach außen nicht sichtbar) zur Sicherheitseinheit durchgereicht, wobei die Ausführungseinheit R die Sicherheitseinheit SE beispielsweise mit dem Befehl "runTLS" dazu auffordert, das TLS-Protokoll zur Übertragung der Nachricht zu verwenden. In Schritt 33 wird dann das tokenisierten Ersatz-JWT durch das originale JWT ersetzt und in das TLS-Protokoll eingebunden (Schritt 34) an die Ausführungseinheit übermittelt (Schritt 35). Diese wird in Schritt 36 an einen TCP/IP-Kommunikationsstapel (Stack) TCP/IP übergeben, um sie an den angegebenen Server zu übertragen.

Es ist möglich, dass in den obigen Ausführungsformen ein Platzhalter im Kommunikationsprotokoll (HTTP, CoAP, MQTT, TLS, TCP/IP) mit dem Ersatzschlüssel besetzt wird.

In die oben genannte Nachricht kann ein Authentifizierungscode und/oder eine -prüfsumme eingefügt sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen. Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Sicherheitseinheit (SE) geeignet für ein Gerät (IOT), insbesondere einem IOT-Gerät, zur Ausführung einer oder mehrerer Applikationen (A1, A2, A3) zum gesicherten Datenaustausch mit einem oder mehrere Web-dienste bereitstellenden Servern, wobei die Sicherheitseinheit ausgebildet ist mit:
- Mitteln (R, SE) zum Abbilden von Originaldaten auf korrespondierende Ersatzdaten und/oder umgekehrt, wobei die Original- und/oder Ersatzdaten jeweils ein Original- (O1, O2, O3, O4) und/oder Ersatzschlüssel (T1, T2, T3, T4) bilden und/oder zu deren Bildung verwendbar sind,
- Mittel zum Erkennen eines von einer in Ausführung gebrachten Applikation (A1) gelieferten, mit einem Originalschlüssel korrespondierenden Ersatzschlüssels und
- Mittel (SE, R) zum Bereitstellen eines zum Ersatzschlüssel korrespondierenden, angeforderten Originalschlüssels mit Hilfe der genannten Mittel zum Abbilden, um den Originalschlüssel für den gesicherten Datenaustausch zum Server verwenden zu können.

2. Sicherheitseinheit nach Anspruch 1, **gekennzeichnet durch** Mittel (R) zum transparenten Weiterleiten des Originalschlüssels auf der zum gesicherten Datenaustausch verwendbaren Kommunikationsprotokollebene.

3. Sicherheitseinheit nach einem der vorhergehenden Ansprüche, **dadurch gekennzeichnet, dass** in der Kommunikationsprotokollebene die Transportschichtsicherheit-Verschlüsselung, abgekürzt TLS oder DTLS, verwendet wird.

4. Sicherheitseinheit nach einem der vorhergehenden Ansprüche, **dadurch gekennzeichnet, dass** ein als Ersatzschlüssel gesetzter Platzhalter im Kommunikationsprotokoll zum gesicherten Datenaustausch durch den bereitgestellten Originalschlüssel ersetzbar ist.

5. IoT-Gerät (IOT) umfassend eine Sicherheitseinheit (SE) nach einem der vorhergehenden Ansprüche, wobei das IoT-Gerät
- ein oder mehrere Applikationen (A1, A2, A3) ausgebildet zum Datenaustausch mit einem oder mehrere Web-Dienste bereitstellenden Servern und
- zumindest eine Ausführungseinheit (R) aufweist, welche zum Ausführen der einen oder mehreren Applikationen ausgebildet ist.

6. IoT-Gerät nach dem vorhergehenden Anspruch, **dadurch gekennzeichnet, dass** die eine oder mehrere Applikationen zu ihrer Ausführung einen solchen Ersatzschlüsseln verwenden kann.

7. IoT-Gerät nach einem der vorhergehenden Ansprüche, **dadurch gekennzeichnet, dass** der Ersatzschlüssel durch den angeforderten und von der Sicherheitseinheit bereitgestellten Originalschlüssel mittels der Ausführungseinheit ersetzt wird.

8. IoT-Gerät nach einem der vorhergehenden Ansprüche, **dadurch gekennzeichnet, dass** der Ersatzschlüssel durch den angeforderten und von der Sicherheitseinheit bereitgestellten Originalschlüssel mittels der Sicherheitseinheit ersetzt wird.

9. Verfahren zur Ausführung einer oder mehrere Applikationen (A1, A2, A3) zum gesicherten Datenaustausch zwischen einem Gerät, insbesondere einem IoT-Gerät (IOT), und einem oder mehreren Web-Dienste bereitstellenden Servern, wobei folgende Schritte ausgeführt werden:
- Übertragen (21, 31) einer Nachricht zum Datenaustausch durch eine in Ausführung gebrachte Applikation, wobei die Nachricht durch Abbildung von Originaldaten auf korrespondierende Ersatzdaten, welche jeweils einen Original- (O1, O2, O3, 04) und/oder Ersatzschlüssel (T1, T2, T3, T4) bilden und/oder zu deren Bildung verwendet werden, modifiziert wird,
- Erkennen (22, 33) des von der in Ausführung gebrachten Applikation gelieferten, mit dem Originalschlüssel korrespondierenden Ersatzschlüssels und
- Bereitstellen eines zum Ersatzschlüssel korrespondierenden, angeforderten Originalschlüssels mit Hilfe einer Rückabbildung (25, 33) der genannten Abbildung, um den Originalschlüssel für den durch die genannte Nachricht eingeleiteten, gesicherten Datenaustausch zum Server (26, 36) zu verwenden.

10. Verfahren nach dem vorhergehenden Anspruch, **dadurch gekennzeichnet, dass** in der Kommunikationsprotokollebene die Transportschichtsicherheit-Verschlüsselung, abgekürzt TLS oder DTLS, verwendet wird.

11. Verfahren nach einem der vorhergehenden Verfahrensansprüche, **dadurch gekennzeichnet, dass** ein als Ersatzschlüssel gesetzter Platzhalter im Kommunikationsprotokoll zum gesicherten Datenaustausch durch den bereitgestellten Originalschlüssel ersetzt wird.

12. Verfahren nach einem der vorhergehenden Verfahrensansprüche, **dadurch gekennzeichnet, dass** in die genannte Nachricht ein Authentifizierungs-Kode und/oder eine -prüfsumme eingefügt ist.

13. Computerprogrammprodukt mit mindestens einem Computerprogramm, das Mittel zur Durchführung des Verfahrens nach einem der vorstehenden Verfahrensansprüche aufweist, wenn das mindestens eine Computerprogramm im IoT-Gerät nach einem der vorstehenden Geräteansprüche zur Ausführung gebracht wird.
